# FASCICULE DE BREVET EUROPEEN

(11) **EP 1 974 239 B1**
(45) Date de publication et mention de la délivrance du brevet: **17.08.2011**
(21) Numéro de dépôt: 06818668.3
(22) Date de dépôt: 20.11.2006
(51) Int. Cl.: G02C 5/12

(54) **ARTICLE DE LUNETTERIE, NOTAMMENT MONTURE DE LUNETTES, COMPRENANT UN SUPPORT POURVU D'UNE MOUSSE THERMOFORMABLE**
BRILLENARTIKEL, INSBESONDERE BRILLENRAHMEN MIT EINEM MIT THERMOFORMBAREM SCHAUM AUSGESTATTETEN HALTER
EYEWEAR ITEM, ESPECIALLY GLASSES FRAMES, COMPRISING A SUPPORT PROVIDED WITH A THERMOFORMABLE FOAM

(30) Priorité: 21.11.2005 FR 0511735
(43) Date de publication de la demande: 01.10.2008
(73) Titulaire: Fradin de la Renaudiere, François-Régis, 74340 Samoëns (FR)
(72) Inventeur: Fradin de la Renaudiere, François-Régis, 74340 Samoëns (FR)
(74) Mandataire: Gaglione, Renaud
(86) Numéro de dépôt international: PCT/EP2006/011102
(87) Numéro de publication internationale: WO 2007/057216

(56) Documents cités:
- DE-A1- 3 130 144
- US-A- 3 597 053
- US-A- 4 953 967
- US-A- 5 196 871
- PATENT ABSTRACTS OF JAPAN vol. 2003, no. 12, 5 décembre 2003 (2003-12-05) & JP 2004 339362 A (SEKISUI CHEM CO LTD), 2 décembre 2004 (2004-12-02)

## Description

L'invention se rapporte à un article de lunetterie, notamment une monture de lunettes ou un masque optique, comprenant plus particulièrement deux verres reliés par un pont ou par une barre frontale.

Une telle monture de lunettes est connue par exemple du document US 5 092 666. Selon ce document, le pont sert de support à un appui se conformant pour prendre et conserver une empreinte anatomique correspondant à la jonction du nez et du front d'un individu. L'appui comprend une partie réalisée dans un élastomère silicone. La monture de lunettes étant en position sur un individu, une pression légère est exercée sur le pont pour prendre dans l'élastomère silicone, l'empreinte anatomique. La monture est ensuite retirée du porteur et l'élastomère silicone soumis à une exposition de rayons ultraviolets pour figer l'empreinte anatomique par une réaction chimique de réticulation.

L'empreinte anatomique de l'appui confère à la monture de lunettes une plus grande stabilité pour le porteur par rapport à qui l'empreinte anatomique a été prise. Cependant, l'élastomère silicone réticulé présente une dureté et une résistance à la pénétration plus élevées que dans son état non réticulé et qui peuvent être ressenties comme un moindre confort par le porteur.

Le document US 3 597 053 divulgue une monture de lunettes comprenant un pont comprenant un support pourvu d'un conteneur de petite dimension rempli de liquide, à l'exemple d'une glycérine, ou pourvu d'un matériau thermoplastique se conformant thermiquement pour prendre une empreinte anatomique après échauffement et conserver cette empreinte après refroidissement. Le matériau thermoplastique, rigide à la température ambiante, est ramolli lors de l'échauffement et reprend son état rigide après le refroidissement.

Le document DE 31 30 144 divulgue une monture de lunettes comprenant un pont comprenant un support pourvu d'un matériau déformable thermiquement et se rigidifiant dans la forme déformée lors du refroidissement, de coussins d'air ou d'un matériau capable d'épouser la forme du nez du porteur de la monture, à l'exemple d'un matériau caoutchoutique ou d'une mousse. Dans ce dernier cas, lorsque la monture de lunettes n'est plus portée par l'utilisateur, le caoutchouc ou la mousse reprend son état d'équilibre non déformé.

Le but de l'invention est de modifier une monture de lunettes du type rappelé en introduction, pour palier l'inconvénient d'un appui conservant une empreinte anatomique rigide ou perdant l'empreinte anatomique dès que la monture de lunettes n'est plus portée.

A cet effet, l'invention a pour objet un article de lunetterie, notamment une monture de lunettes ou un masque optique, comprenant un pont ou une barre frontale, caractérisé en ce que le pont ou la barre frontale comprend un support pourvu d'une épaisseur en mousse thermoformable se conformant thermiquement en prenant une empreinte après échauffement de l'épaisseur de mousse puis application sur une région anatomique d'un porteur et en conservant cette empreinte après refroidissement.

La mousse se conforme thermiquement selon l'empreinte anatomique par une simple rétractation produisant localement une diminution de l'épaisseur. Il s'agit d'un phénomène physique qui ne modifie pas le caractère mécaniquement absorbant de la mousse. D'où il résulte que le support et l'épaisseur de mousse forment un appui qui offre à la fois une plus grande stabilité pour le porteur dont l'empreinte a été prise et une plus grande sensation de confort.

La mousse est de préférence une polyoléfine réticulée. Il est prévu de la coller à même le pont de la monture de lunettes ou à même la barre frontale. Dans ce cas, le support est intégré au pont ou à la barre frontale. C'est par exemple le cas d'une monture de lunettes en matière plastique. Mais de préférence, le support est fixé de façon amovible au pont ou à la barre frontale pour permettre d'échauffer l'épaisseur de mousse séparément de la monture de lunettes. Le support est fixé au pont ou la barre frontale à l'aide par exemple d'encoches pour venir en prise par pincement élastique avec le pont ou la barre frontale.

Le support est intégré ou fixé au pont pour que l'épaisseur de mousse prenne et conserve l'empreinte anatomique correspondant à la jonction du nez et du front d'un individu. Lorsqu'il est intégré ou fixé à la barre frontale, le support permet à l'épaisseur de mousse de prendre et de conserver l'empreinte anatomique correspondant aux arcades sourcilières de l'individu.

Le support présente avantageusement un profil concave ou convexe sur lequel la mousse est fixée, par exemple sous la forme d'une feuille d'épaisseur constante, en épousant le profil concave ou convexe. Un profil concave permet de mieux suivre la jonction du nez et du front de l'individu suivant une ligne verticale, tandis qu'un profil convexe permet de mieux suivre cette jonction suivant une ligne horizontale. Le support permet ainsi de répartir plus uniformément la déformation de la mousse lors de la prise d'empreinte, ce qui contribue encore à augmenter las sensation de confort.

D'autres avantages apparaîtront à la lumière de la description de cinq modes de réalisation de l'invention illustrée par les dessins.
La figure 1 est une vue schématique en perspective d'une monture de lunettes selon un premier mode d'exécution où le pont de la monture est une barrette simple.
La figure 2 est une vue en coupe montrant le support de l'épaisseur de mousse, à fixer sur le pont en simple barrette de la monture illustrée par la figure 1.
La figure 3 est une vue en coupe montrant un autre support de l'épaisseur de mousse, à fixer sur un pont en double barrette.
La figure 4 est une vue schématique en perspective d'une monture de lunettes se distinguant de la monture illustrée par la figure 1 par le fait que le support de l'épaisseur de mousse possède un profil concave dans un plan horizontal et un profil convexe dans un plan vertical.
La figure 5 est une vue en coupe du support et de l'épaisseur de mousse illustré par la figure 4.
La figure 6 est une vue en coupe montrant un autre support de l'épaisseur de mousse, à fixer par une vis au pont de la monture illustrée par la figure 1.
La figure 7 est une vue schématique en perspective d'une monture de lunettes selon un deuxième mode d'exécution où le support de l'épaisseur de mousse est intégré au pont de la monture.
La figure 8 est une vue schématique d'un masque optique, par exemple solaire, comprenant une pièce unique formant à la fois deux verres et un pont sur lequel, selon un troisième mode d'exécution de l'invention, le support de l'épaisseur de mousse est fixé.
La figure 9 montre en vue de dessus une monture de lunettes selon un quatrième mode d'exécution où le support de l'épaisseur de mousse est fixé à la barre frontale de la monture de lunettes.
La figure 10 est une vue en perspective de la monture de lunettes illustrée par la figure 9.
La figure 11 est une vue en perspective d'une monture de lunettes selon un cinquième mode d'exécution où le support de l'épaisseur de mousse comprend deux pattes destinées à servir de plaquettes.

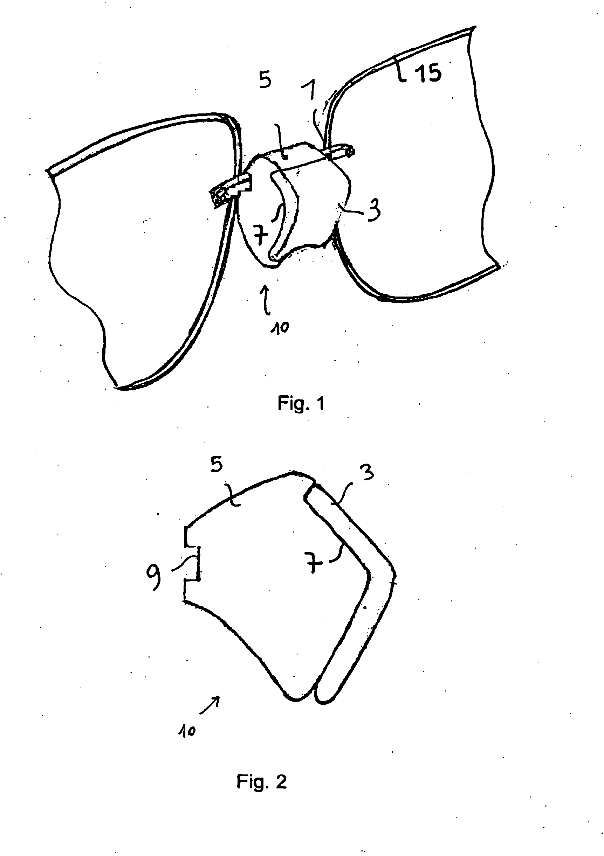

En référence aux figures 1 à 7, une monture de lunettes comprend un pont 1 pour relier entre eux deux verres 15 de, la monture.

Selon l'invention, le pont 1 comprend un support 5 sur lequel est fixé une épaisseur de mousse 3 se conformant thermiquement pour prendre après échauffement et conserver cette après refroidissement, l'empreinte anatomique correspondant à la jonction du nez et du front d'un individu.

Dans le premier mode d'exécution de l'invention, figures 1 à 6, le support 5 est muni d'un profil convexe 7 pour mieux suivre la jonction du nez et du front d'un individu suivant une ligne verticale. L'épaisseur de mousse 3 est constituée par une feuille fixée sur le support 5 en épousant le profil convexe 7. Cet agencement permet de répartir plus uniformément la déformation de la mousse le long du profil convexe lors de la prise de l'empreinte anatomique. La feuille de, mousse peut être remplacée par des plots de mousse distribués sur le profil convexe du support.

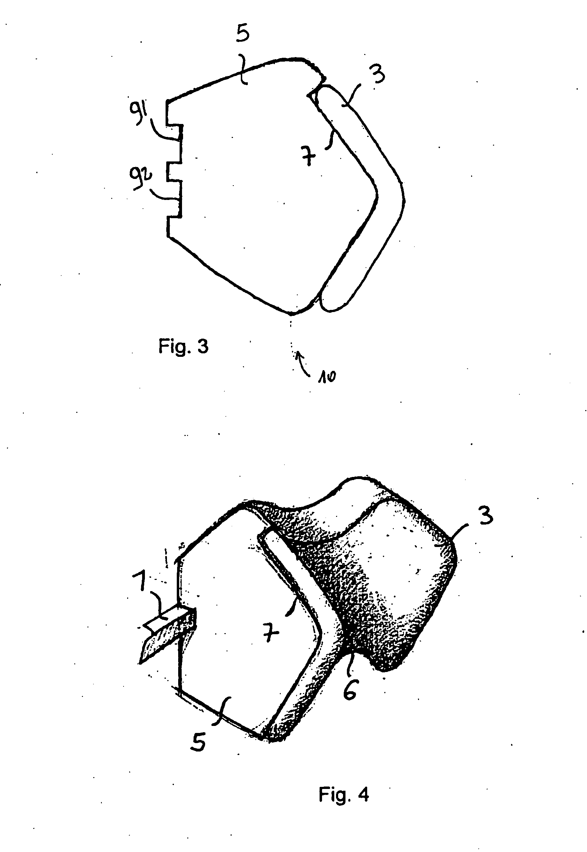

Il est prévu de donner au support 5 un profil concave 6 pour mieux suivre suivant une ligne horizontale, la jonction du nez et du front du porteur dont l'empreinte anatomique est prise. Il est également prévu de combiner un profil concave 6 et un profil convexe 7 dans un même support, comme illustré par la figure 4.

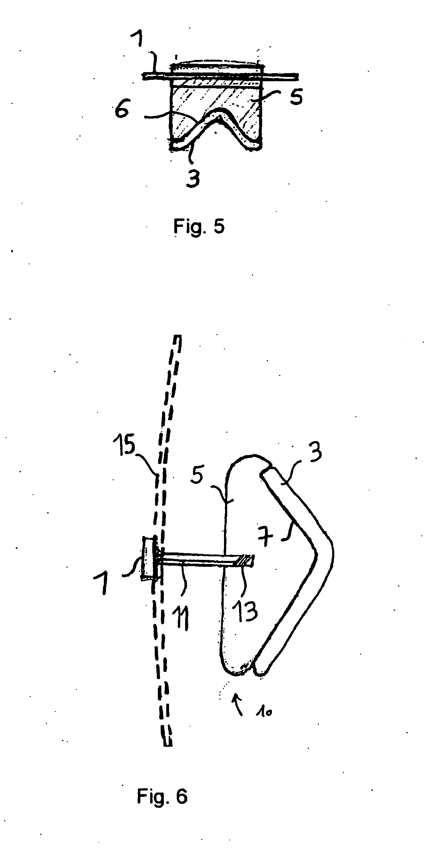

L'appui 10 comprenant le support 5 et l'épaisseur de mousse 3 est fixé au pont 1 de la monture de lunettes par des encoches 9, figure 2, exerçant un pincement élastique sur la barrette simple du pont. Plusieurs encoches 91, 92, figure 3, sont prévues pour permettre de fixer le support 5 à un pont se présentant sous la forme d'une double barrette ou pour offrir un réglage en position verticale du support 5 par rapport au pont à simple barrette. La figure 6 illustre un autre mode de fixation du support 5 au pont de la monture de lunettes, mettant en oeuvre une tige 11 soudée au pont 1 sur laquelle est vissé le support 5 dans un taraudage 13.

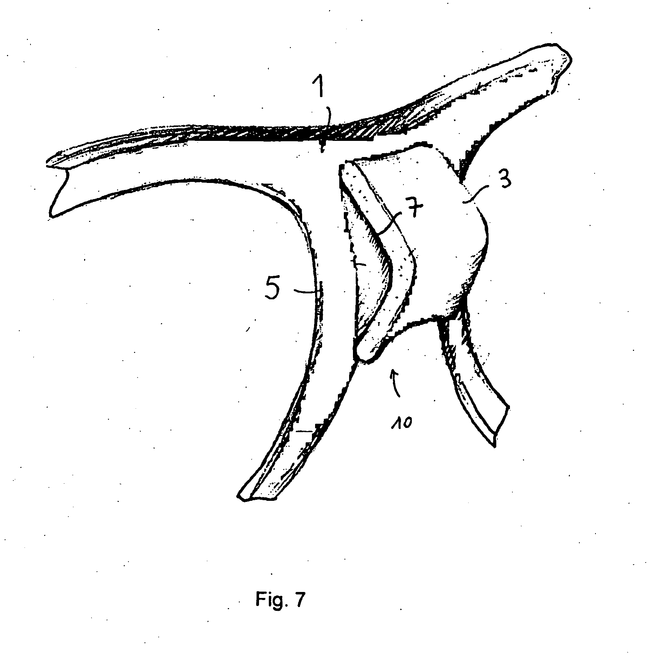

Le deuxième mode d'exécution de l'invention, figure 7, concerne une monture de lunettes en matière plastique. Le support 5 est ici intégré au pont 1. Lors de la fabrication de la monture de lunettes par injection de la matière plastique, le support 5 est par exemple formé par une modification en creux du moule d'injection.

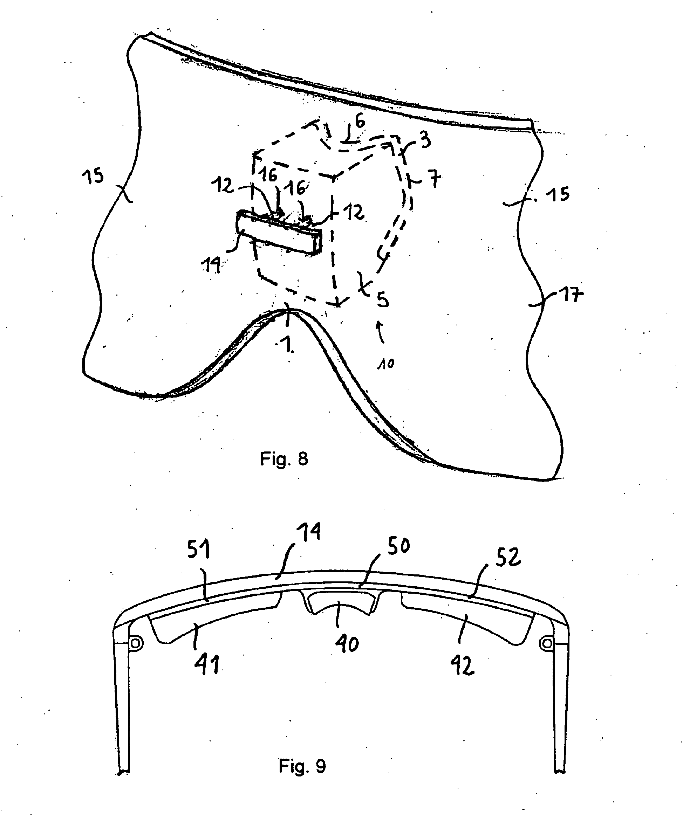

Le troisième mode d'exécution de l'invention concerne, figure 8, un masque optique, par exemple solaire, comprenant une pièce unique 17 formant deux verres 15 reliés par un pont 1. La pièce unique 17 est en matériau organique, par exemple en polycarbonate ou en polyamide. Le support 5 est fixé au pont 1 par l'intermédiaire d'une plaquette 14 fixe par rapport à deux tiges 12, elles-mêmes en prise avec le support 5 par pincement élastique, par exemple par un clip, après avoir traversé le pont 1 de la pièce unique 17 par deux perçages 16.

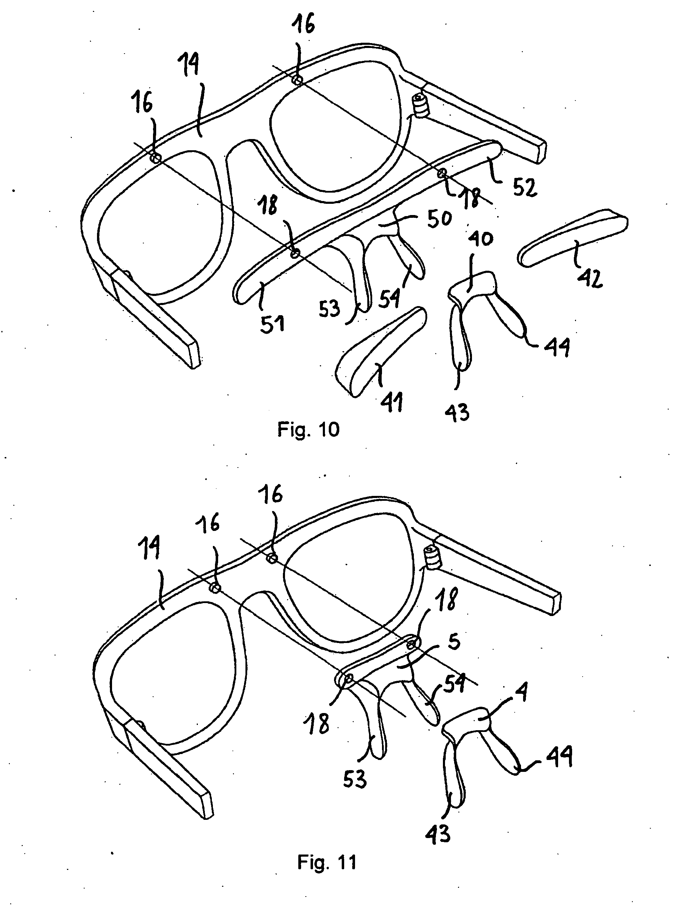

Dans le quatrième mode d'exécution, figures 9 et 10, le support 5 est fixé à la barre frontale 14 de la monture de lunettes. La fixation est obtenue par exemple par des plots formés 16 sur la barre frontale pour s'insérer dans des encoches 18 formées dans le support 5. Dans le mode d'exécution plus particulièrement illustré, le support comprend une partie médiane 51 et deux parties latérales 50 et 52 disposées de part et d'autre de la partie médiane. Une première épaisseur de mousse 3 épouse le profil à la fois concave et convexe de la partie médiane 51, comme décrit précédemment en référence à la figure 4, pour prendre et conserver l'empreinte anatomique correspondant à la jonction du nez et du front du porteur de la monture de lunettes. Les deux parties latérales 50 et 52 portent chacune une épaisseur de mousse 3 pour prendre et conserver l'empreinte anatomique correspondant aux arcades sourcilières du porteur. Ce quatrième mode d'exécution est particulièrement intéressant dans le cas où la monture de lunettes est portée en étant tirée vers l'arrière de la tête. La monture de lunettes repose en effet non seulement sur l'angle naso-frontal du porteur, mais aussi sur les arcades sourcilières. La pression, distribuée sur une surface plus grande, est ainsi moindre et le port prolongé, plus confortable.

A noter que ce mode d'exécution s'applique avantageusement aux monture de lunettes dont la face est rigide, comme c'est le cas de nombreuses montures de lunettes correctrices. Dans ce cas, la mousse thermoformable permet d'adapter la monture de lunettes à l'anatomie du porteur, tant pour l'angle naso-frontal que pour les arcades sourcilières, et de mieux absorber des chocs.

Dans le cinquième mode d'exécution illustré par la figure 11, le support 5 comprend deux pattes 53,54 destinées à servir de plaquettes et sur lesquelles s'étend une épaisseur 43,44 de mousse 3. Le support 5 est fixé à la barre frontale 14 de la même façon que celle décrite pour le quatrième mode d'exécution.

De préférence, la mousse thermoformable est une polyoléfine réticulée à cellule fermée. La densité de la mousse est de l'ordre de 30 kg/m³. Elle peut toutefois être comprise entre 20 kg/m³ et 40 kg/m³. Un traitement anti-allergique et un traitement anti-bactérien lui sont appliqués avant d'être fixée à même le pont de la monture de lunettes ou sur le support profilé. La fixation est par exemple obtenue par simple apport de chaleur si le support est un polyéthylène haute densité ou par collage à l'aide d'un adhésif thermocollant.

La prise de l'empreinte anatomique est réalisée par un opticien. Ce dernier préchauffe le support de telle manière que l'épaisseur de mousse atteigne une température comprise entre 100 et 110 degrés celsius. Le temps de chauffage est de l'ordre de deux minutes, en procédant progressivement et en utilisant une chaufferette à air chaud traditionnelle. L'opticien s'assure de la bonne température en appuyant avec le doigt sur l'épaisseur de mousse, pour vérifier qu'elle prend bien la forme imprimée par le doigt.

A noter que le support pourvu de l'épaisseur de mousse est fixé de façon amovible sur le pont ou sur la barre frontale pour être chauffé par l'opticien séparément de la monture de lunettes. On diminue ainsi les risques d'endommager les verres lors de l'échauffement. Le support est ensuite remonté sur le pont ou sur la barre frontale pour procéder à la prise d'empreinte.

La monture de lunettes est mise en place sur le porteur et l'opticien exerce une pression de l'ordre de 2 à 5 kg sur le pont de la monture. Plusieurs manières sont possibles : la monture peut être tirée en arrière par un ruban élastique autour de la tête du porteur, suffisamment tendu pour exercer la pression souhaitée. L'opticien peut également faire reposer l'arrière de la tête du porteur contre un appui-tête, et exercer lui-même la pression désirée.

Le temps de prise est de l'ordre de 1 minute. La mousse thermoformable, une fois refroidie, conserve alors la forme de l'empreinte anatomique du porteur.

Il convient de relever que la mousse thermoformable utilisée selon l'invention est un excellent isolant thermique, et possède de préférence une conductivité thermique inférieure à 0,040 W/m.K, plus particulièrement égale à 0,034 W/m.K, si bien que l'élévation de température n'est pas perceptible au touché. Eventuellement, l'opticien peut protéger le visage du porteur en appliquant un feutre, isolant thermique, suffisamment fin pour épouser la jonction de nez et du front de l'individu. On utilisera par exemple un feutre polyester de 1 à 2 mm d'épaisseur, d'une densité surfacique de l'ordre de 200 g/m².

Une monture de lunettes ou un masque optique selon l'invention offre à la fois une plus grande stabilité et un plus grand confort quelle que soit l'anatomie du porteur. Elle est particulièrement bien adaptée à la pratique sportive. Pour écarter tout risque de perte de la monture, le porteur peut ainsi la retenir à l'aide d'un cordon élastique fixé à chaque branche et passé autour de la tête. La force appliquée sur la monture de lunettes par le cordon élastique ne procure aucune sensation de gêne mais est au contraire répartie sur tout l'appui conformé à l'anatomie du porteur par l'épaisseur de mousse. De surcroît, l'épaisseur de mousse réduit les risques de blessure au visage en cas de choc sur la monture de lunettes.

## Revendications

1. Article de lunetterie, notamment monture de lunettes ou masque optique, comprenant un pont (1) ou une barre frontale (14), tel que le pont (1) ou la barre frontale (14) comprend un support (5) pourvu d'une épaisseur (4) en matériau thermoformable (3), se conformant thermiquement en prenant une empreinte après échauffement de l'épaisseur (4) en materiau thermoformable (3) puis application sur une région anatomique d'un porteur et en conservant cette empreinte après refroidissement, **caractérisé en ce que** le matériau thermoformable est une mousse thermoformable.

2. Article de lunetterie selon la revendication 1, **caractérisé en ce que** la mousse (3) possède une conductivité thermique inférieure à 0,040 W/m.K, de préférence égale à 0,034 W/m.K.

3. Article de lunetterie selon la revendication 1 ou 2, **caractérisé en ce que** la mousse (3) est une polyoléfine réticulée.

4. Article de lunetterie selon la revendication 3, **caractérisé en ce que** la mousse (3) possède une densité comprise entre 20 kg/m³ et 40 kg/m³, de préférence égale à 30 kg/m³.

5. Article de lunetterie selon la revendication 1 ou 2, **caractérisé en ce que** le support (5) est intégré ou fixé de façon amovible au pont (1) ou à la barre frontale (14).

6. Article de lunetterie selon la revendication 5, **caractérisé en ce que** l'épaisseur (4) de mousse (3) épouse un profil concave (6) ou convexe (7) du support (5).

7. Article de lunetterie selon la revendication 5, **caractérisé en ce que** le support (5) est muni d'encoches (9,91,92) pour venir en prise par pincement élastique avec le pont (1) ou la barre frontale (14).

8. Article de lunetterie selon la revendication 5, **caractérisé en ce que** le support (5) est muni d'un taraudage (13) pour recevoir une tige (11) de fixation par rapport au pont (1) ou la barre frontale (14).

9. Article de lunetterie selon la revendication 5, **caractérisé en ce que** le support (5) est fixé au pont (1) par l'intermédiaire d'une plaquette (14) fixe par rapport à une tige (12), elle-même en prise avec le support (5) par pincement élastique après avoir traversé le pont (1) par un perçage (16).

10. Article de lunetterie selon la revendication 5, **caractérisé en ce que** le support (5) comprend deux pattes (53,54) destinées à servir de plaquettes et sur lesquelles s'étend une épaisseur (43,44) de mousse (3).

## Claims

1. Item of eyewear, in particular a glasses frame or optical mask, including a bridge (1) or a brow-bar (14), so that the bridge (1) or the brow-bar (14) comprises a support (5) provided with a layer (4) of thermo-formable material (3), which thermally conforms by taking an impression after the layer (4) of the thermoformable material (3) is heated and then applied to an anatomical area of a wearer and by retaining that impression after cooling, **characterised in that** the thermoformable material is a thermo-formable foam (3).

2. Item of eyewear according to claim 1, wherein the foam (3) has a thermal conductivity of less than 0.040 W/m.K, preferably equal to 0.034 W/m.K.

3. Item of eyewear according to claim 1 or 2, wherein the foam (3) is a cross-linked polyolefin.

4. Item of eyewear according to claim 3, wherein the foam (3) has a density of between 20 kg/m³ and 40 kg/m³, preferably equal to 30 kg/m³.

5. Item of eyewear according to claim 1 or 2, wherein the support (5) is integrated or fixed in a removable way to the bridge (1) or the brow-bar (14).

6. Item of eyewear according to claim 5, wherein the layer (4) of foam (3) adopts a concave profile (6) or a convex profile (7) of the support (5).

7. Item of eyewear according to claim 5, wherein the support (5) has notches (9, 91, 92) so that it engages with the bridge (1) or the brow-bar (14) by elastic pinching.

8. Item of eyewear according to claim 5, wherein the support (5) has a threaded bore (13) to receive a rod (11) for fixing relative to the bridge (1) or the brow-bar (14).

9. Item of eyewear according to claim 5, wherein the support (5) is fixed to the bridge (1) by means of a plate (14) fixed relative to a rod (12), itself held to the support (5) by elastic pinching after passing through the bridge (1) via a bore (16).

10. Item of eyewear according to claim 5, wherein the support (5) comprises two legs (53, 54) intended to be used as pads and over which a layer (43, 44) of foam (3) extends.

## Patentansprüche

1. Brilleneinzelteil, insbesondere Brillengestell oder optische Maske, umfassend eine Brücke (1) oder eine frontale Stab (14), die eine mit einer Schicht (4) thermoformbaren Materials (3) ausgestattete Stütze (5) enthält, das sich thermisch anpasst, indem es einen Eindruck nimmt, nach Heizung der Schicht (4) des thermoformbaren Materials (3) und dann Druck auf einen anatomischen Bereich eines Trägers und indem es diesen Eindruck nach Abkühlung behält, **dadurch gekennzeichnet, dass** das thermoformbare Material ein thermoformbarer Schaumgummi (3) ist.

2. Brilleneinzelteil von Anspruch 1, **dadurch gekennzeichnet, dass** der Schaumgummi (3) eine Wärmeleitfähigkeit besitzt, die kleiner als 0.040 W/m.K ist und vorzugsweise 0.034 W/m.K gleich ist.

3. Brilleneinzelteil von Anspruch 1 oder 2, **dadurch gekennzeichnet, dass** der Schaumgummi (3) ein querverbundenes Polyolefin ist.

4. Brilleneinzelteil von Anspruch 3, **dadurch gekennzeichnet, dass** der Schaumgummi (3) eine Dichte besitzt, die zwischen 20 kg/m³ und 40 kg/m³ liegt und vorzugsweise 30 kg/m³ gleich ist.

5. Brilleneinzelteil von Anspruch 1 oder 2, **dadurch gekennzeichnet, dass** die Stütze (5) zur Brücke (1) oder zur Stab (14) integriert oder abnehmbar zur Brücke (1) oder zur Stab (14) befestigt ist.

6. Brilleneinzelteil von Anspruch 5, **dadurch gekennzeichnet, dass** die Schicht (4) Schaumgummi (3) ein konkaves Profil (6) oder ein konvexes Profil (7) der Stütze (5) annimmt.

7. Brilleneinzelteil von Anspruch 5, **dadurch gekennzeichnet, dass** die Stütze (5) Kerben (9, 91, 92) besitzt, damit sie in der Brücke (1) oder in der Stab (14) durch elastisches Klemmen sich engagiert wird.

8. Brilleneinzelteil von Anspruch 5, **dadurch gekennzeichnet, dass** die Stütze (5) eine Gewindebohrung (13) für eine Stange (11) besitzt, die für die Befestigung an der Brücke (1) oder der Stab (14) verwendet wird.

9. Brilleneinzelteil von Anspruch 5, **dadurch gekennzeichnet, dass** die Stütze (5) an der Brücke (1) mittels einer Platte (14) befestigt ist, die an einer Stange (12) befestigt ist, die sich selbst in der Stütze (5) durch elastisches Klemmen engagiert wird, nachdem sie die Brücke (1) über ein Lochen (16) durchgedrungen hatte.

10. Brilleneinzelteil von Anspruch 5, **dadurch gekennzeichnet, dass** die Stütze (5) zwei als Seitenstegplättchen verwendete Patten (53, 54) umfasst, die von einer Schicht (43, 44) Schaumgummi (3) bedeckt sind.
